# EUROPEAN PATENT APPLICATION

(11) **EP 4 354 916 A1**
(43) Date of publication of application: **17.04.2024**
(21) Application number: 22844891.6
(22) Date of filing: 13.04.2022
(51) Int. Cl.: H04W 4/80

(54) **TERMINAL ACCESS METHOD, EQUIPMENT AND TERMINAL**

(30) Priority: 19.07.2021 CN 202110812469
(71) Applicant: ZTE Corporation, Shenzhen, Guangdong 518057 (CN)
(72) Inventor: ZHAO, Xiaoyu, Shenzhen, Guangdong 518057 (CN); LI, Xiaofeng, Shenzhen, Guangdong 518057 (CN)
(74) Representative: Canzler & Bergmeier Patentanwälte Partnerschaft mbB
(86) International application number: PCT/CN2022/086694
(87) International publication number: WO 2023/000719

(57) **Abstract**

The present disclosure provides a terminal access method, equipment and a terminal, and relates to the technical field of communications. The method comprises: when it is determined that an administrator terminal is located within a preset range, acquiring management configuration information of the administrator terminal by means of near-field communication (NFC), wherein the management configuration information is used for managing a visitor terminal; and according to the management configuration information and information, to be verified, of the visitor terminal, determining whether the access of the visitor terminal is permitted.

## Description

### CROSS-REFERENCE TO RELATED APPLICATIONS

The present disclosure claims priority from Chinese patent application CN202110812469.5 titled "TERMINAL ACCESS METHOD, EQUIPMENT and TERMINAL" filed on July 19, 2021, the entire contents of which are incorporated herein by reference.

### TECHNICAL FIELD

The present disclosure relates to the field of communication technologies, and to a terminal access method, equipment and terminal.

### BACKGROUND

A customer premise equipment (CPE), connected not only to an access network device but also to a terminal, converts a mobile communication signal into a short-distance communication signal (e.g., a signal of a mobile hotspot (Wi-Fi), etc.), so that the terminal can obtain a better signal and access to the network.

At present, a user typically configures Wi-Fi parameters in the CPE manually through a terminal connected to the CPE, which cannot ensure the accuracy of the configuration information and consumes a relatively long time.

### SUMMARY

The present disclosure provides a terminal access method, an equipment, and a terminal.

The present disclosure provides a terminal access method, including : acquiring, under the condition that an administrator terminal is located within a preset range, management configuration information of the administrator terminal by means of near field communication (NFC), wherein the management configuration information is used for managing a visitor terminal; and determining, according to the management configuration information and information to be verified of the visitor terminal, whether access of the visitor terminal is permitted.

The present disclosure provides a terminal access method, including : acquiring management configuration information, wherein the management configuration information is used for managing a visitor terminal; and transmitting, under the condition that a current terminal is located within a preset range of a customer premise equipment (CPE), the management configuration information to the CPE by means of near field communication (NFC), so that the CPE determines, according to the management configuration information and the information to be verified of the visitor terminal, whether access of the visitor terminal is permitted.

The present disclosure provides a customer premise equipment, including : a first acquisition module configured to acquire, under the condition that an administrator terminal is located within a preset range, management configuration information of the administrator terminal by means of near field communication (NFC), wherein the management configuration information is used for managing a visitor terminal; and an access module configured to determine, according to the management configuration information and information to be verified of the visitor terminal, whether access of the visitor terminal is permitted.

The present disclosure provides a routing device, including at least: the customer premise equipment.

The present disclosure provides a terminal, including : a second acquisition module configured to acquire management configuration information, wherein the management configuration information is used for managing a visitor terminal; and a transmission module configured to transmit, under the condition that a current terminal is located within a preset range of a customer premise equipment (CPE), the management configuration information to the CPE by means of near field communication (NFC), so that the CPE determines, according to the management configuration information and the information to be verified of the visitor terminal, whether access of the visitor terminal is permitted.

The present disclosure provides an electronic device, including: one or more processors; and a memory having one or more programs stored thereon which, when executed by the one or more processors, cause the one or more processors to implement any one of the terminal access methods described herein.

The present disclosure provides a readable storage medium having a computer program stored thereon which, when executed by a processor, causes any one of the terminal access methods described herein to be implemented.

### BRIEF DESCRIPTION OF DRAWINGS

FIG. 1 shows a schematic flowchart of a terminal access method according to an embodiment of the present disclosure.
FIG. 2 shows a schematic flowchart of a terminal access method according to another embodiment of the present disclosure.
FIG. 3 shows a schematic flowchart of a terminal access method according to still another embodiment of the present disclosure.
FIG. 4 shows a schematic structural diagram of a customer premise equipment according to an embodiment of the present disclosure.
FIG. 5 shows a schematic structural diagram of a routing device according to an embodiment of the present disclosure.
FIG. 6 shows a schematic structural diagram of a terminal according to an embodiment of the present disclosure.
FIG. 7 shows a block diagram of a terminal access system according to an embodiment of the present disclosure.
FIG. 8 shows a schematic structural diagram of a wireless routing device in a terminal access system according to an embodiment of the present disclosure.
FIG. 9 shows a schematic structural diagram of a terminal in a terminal access system according to an embodiment of the present disclosure.
FIG. 10 shows a block diagram of a terminal access system according to another embodiment of the present disclosure.
FIG. 11 shows a schematic flowchart of a method for configuring a wireless routing device by an administrator terminal according to an embodiment of the present disclosure.
FIG. 12 shows a schematic flowchart of a method for accessing a wireless routing device by a visitor terminal according to an embodiment of the present disclosure.
FIG. 13 shows a block diagram of an exemplary hardware architecture of a computing device capable of implementing the terminal access method and apparatus according to the embodiments of the present disclosure.

### DETAIL DESCRIPTION OF EMBODIMENTS

For clarity and better understanding of the objects, technical solution and advantages of the present disclosure, embodiments of the present disclosure will be described in detail below in conjunction with the accompanying drawings. It should be noted that the embodiments of the present disclosure and features therein may be combined with each other in any manner as long as they are not contradictory.

A CPE, connected not only to an access network device but also to a terminal, converts a mobile communication signal into a short-distance communication signal (e.g., a signal of a mobile hotspot (Wi-Fi), etc.), so that the terminal can obtain a better signal and access to the network.

When configuring parameters in the CPE, a user typically configures the CPE through a terminal (e.g., a computer or a smart phone, etc.) connected to the CPE, where an application program corresponding to the CPE is installed. Therefore, the user has to log in the application program to configure parameters related to the CPE, which may consume a long time; and moreover, the accuracy of configuration information cannot be guaranteed due to manual configuration of the parameters of the CPE, and the operation is complicated.

The CPE may have a near field communication (NFC) function, but only one user name and password can be stored in the configuration information corresponding to general NFC. Under the condition that the terminal connected to the CPE has to be frequently switched, each time the user is changed, the new user has to manually log in the application program on the terminal to set the CPE, resulting in complicated operation and reduced user experience.

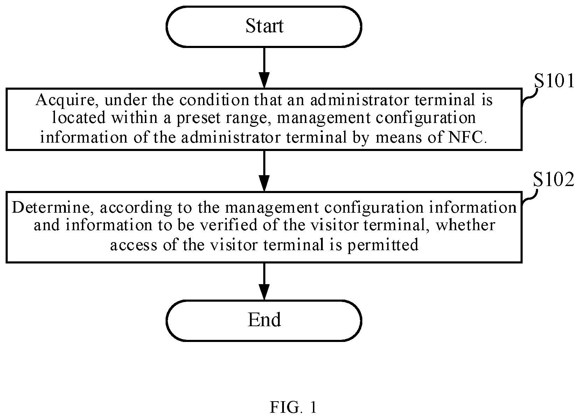

FIG. 1 shows a schematic flowchart of a terminal access method according to an embodiment of the present disclosure. This terminal access method can be applied to a customer premise equipment arranged in a routing device. As shown in FIG. 1, the terminal access method of the present disclosure includes the following operations S 101 to S102.

At operation S101, acquiring, under the condition that an administrator terminal is located within a preset range, management configuration information of the administrator terminal by means of NFC.

The management configuration information is used for managing a visitor terminal.

For example, under the condition that the administrator terminal is located within the preset range (e.g., a distance between the administrator terminal and the customer premise equipment is 5 meters, etc.), the customer premise equipment may read the management configuration information in an NFC module built in the administrator terminal through an NFC module built in the customer premise equipment, so that the customer premise equipment may verify different visitor terminals according to the management configuration information, and the accuracy of the configuration information in the customer premise equipment can be guaranteed since the user does not need to manually set the configuration information in the customer premise equipment any more.

At operation S102, determining, according to the management configuration information and information to be verified of the visitor terminal, whether access of the visitor terminal is permitted.

The information to be verified of the visitor terminal is used to represent identity information of the visitor terminal. After obtaining the information to be verified of the visitor terminal, the customer premise equipment may compare the information to be verified with the management configuration information to determine whether the visitor terminal is a valid terminal, and permit access of the visitor terminal after determining that the visitor terminal is valid. In this manner, validity of the visitor terminal accessed to the customer premise equipment can be guaranteed, other terminals which do not pass the authentication are prevented from using the network resources provided by the customer premise equipment, and the safety of the network resources is improved.

In this embodiment, under the condition that the administrator terminal is located within the preset range, the management configuration information of the administrator terminal can be quickly acquired by means of the NFC without manual setting by a user, so that the accuracy of the management configuration information can be guaranteed, and the visitor terminal can access the network quickly, thereby providing great convenience for the user; and whether access of the visitor terminal is permitted is determined according to the management configuration information and information to be verified of the visitor terminal, so that validity of the visitor terminal is guaranteed.

In some implementations, before performing the operation S101 of acquiring, under the condition that the administrator terminal is located within the preset range, management configuration information of the administrator terminal by means of the NFC in the present disclosure, the method further includes: reading, under the condition that the visitor terminal is located within the preset range, the information to be verified of the visitor terminal by means of the NFC.

The visitor terminal is also a terminal with an NFC function, and under the condition that the visitor terminal is located within the preset range, the customer premise equipment may read information to be verified in an NFC module built in the visitor terminal through an NFC module built in the customer premise equipment, to facilitate verification of an identity of the visitor terminal.

For example, the information to be verified can include: any one or more of a visitor terminal identifier, a visitor service set identifier, a visitor password, a visitor encryption type, or a visitor authentication type.

By verifying the visitor terminal through multi-dimensional information, authenticity of the identity of the visitor terminal can be guaranteed, so that other terminals which do not pass the authentication are prevented from using the network resources provided by the customer premise equipment, and the safety of the network resources is improved.

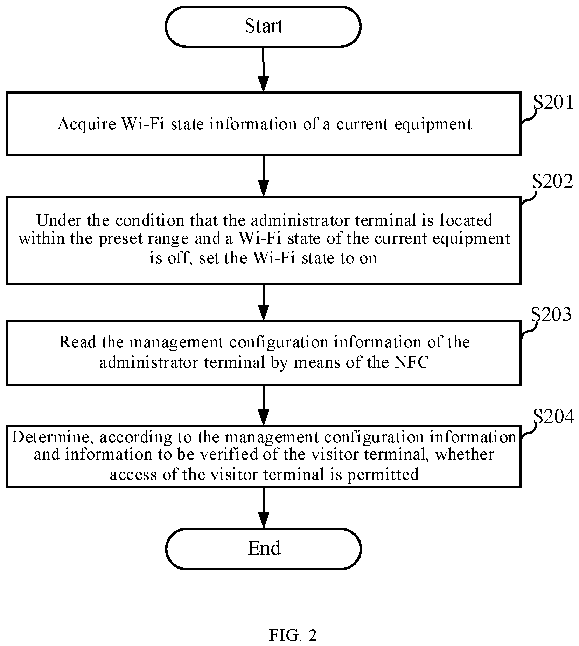

FIG. 2 shows a schematic flowchart of a terminal access method according to another embodiment of the present disclosure. This terminal access method may be applied to a customer premise equipment arranged in a routing device. This embodiment differs from the previous embodiment in that: whether to read the management configuration information of the administrator terminal is determined by acquiring Wi-Fi state information of a current equipment and whether the administrator terminal is located within the preset range.

As shown in FIG. 2, the terminal access method of the present disclosure includes the following operations S201 to S204.

At operation S201, acquiring Wi-Fi state information of a current equipment.

The Wi-Fi state information includes: an on state or an off state.

At operation S202, under the condition that the administrator terminal is located within the preset range and a Wi-Fi state of the current equipment is off, setting the Wi-Fi state to on.

A Wi-Fi function in the customer premise equipment is enabled by setting the Wi-Fi state, so that the administrator terminal can configure parameters related to the Wi-Fi function, the visitor terminal can be connected to the customer premise equipment, and an access speed of the visitor terminal to the network is accelerated, thereby improving the user experience.

At operation S203, reading the management configuration information of the administrator terminal by means of the NFC.

The management configuration information may include: any one or more of an administrator terminal identifier, a preset service set identifier, a preset password, a preset encryption type, or a preset authentication type.

According to a preset data format, the management configuration information may be stored in a storage unit of the administrator terminal (e.g., a storage module corresponding to an NFC module built in the administrator terminal, etc.). Under the condition that the administrator terminal is located within the preset range, the management configuration information stored in the storage unit of the administrator terminal is read by the NFC module and used for updating the configuration information in the customer premise equipment, so as to facilitate verification of different visitor terminals to be accessed.

At operation S204, determining, according to the management configuration information and information to be verified of the visitor terminal, whether access of the visitor terminal is permitted.

Under the condition that the management configuration information is the same as the information to be verified of the visitor terminal, access of the visitor terminal is permitted; and under the condition that the management configuration information is not the same as the information to be verified of the visitor terminal, the access request of the visitor terminal is rejected.

In some implementations, after determining, according to the management configuration information and the information to be verified of the visitor terminal, whether access of the visitor terminal is permitted, the method further includes: under the condition that a Wi-Fi state of the current equipment is on and the visitor terminal is not located within the preset range, setting the Wi-Fi state to off; and updating the management configuration information with preset configuration information.

The preset configuration information can include: conventional user configuration information originally configured by the administrator terminal, such as configuration information of a terminal used by a family member, default configuration information of an equipment, or the like. The above types of preset configuration information are merely listed by way of example, and the preset configuration information may be configured according to actual needs; other types of preset configuration information not illustrated herein are also within the protection scope of the present disclosure, and are not described in detail herein.

In some implementations, the preset configuration information may be consistent in data format with the management configuration information to facilitate updating of the management configuration information.

In this embodiment, under the condition that the administrator terminal is located within the preset range and the Wi-Fi state of the current equipment is off, setting the Wi-Fi state to on can quickly enable the Wi-Fi function in the customer premise equipment; and by reading the management configuration information of the administrator terminal by means of the NFC, configuration of parameters related to the Wi-Fi function by the administrator terminal can be accelerated, so as to facilitate subsequent verification of the visitor terminal and guarantee authenticity of the identity of the visitor terminal.

The operation S204 of determining, according to the management configuration information and information to be verified of the visitor terminal, whether access of the visitor terminal is permitted in the present disclosure may be further implemented by: comparing the preset service set identifier with the visitor service set identifier to obtain an identifier comparison result; comparing the preset password with the visitor password to obtain a password comparison result; and determining, according to the identifier comparison result and the password comparison result, whether access of the visitor terminal is permitted.

The management configuration information includes: a preset service set identifier and a preset password; and the information to be verified includes: a visitor service set identifier and a visitor password.

By verifying the visitor service set identifier and the visitor password of the visitor terminal, respectively, the visitor terminal is permitted to access the customer premise equipment only when the identifier comparison result and the password comparison result both indicate the same, thereby guaranteeing validity of the visitor terminal accessed to the customer premise equipment and improving the safety of the network connection.

In some implementations, determining, according to the identifier comparison result and the password comparison result, whether access of the visitor terminal is permitted includes: under the condition that the identifier comparison result indicates the same identifier and the password comparison result indicates the same password, acquiring an acknowledge identifier fed back from the visitor terminal; and determining, according to the acknowledge identifier, to permit access of the visitor terminal.

The acknowledge identifier fed back from the visitor terminal represents acknowledge information of the user using the visitor terminal, which can further confirm the behavior of accessing the visitor terminal into the customer premise equipment, to ensure that the access meets the user requirement and is a behavior permitted by the user. Therefore, random access of the visitor terminal to a network of poor safety is avoided, and data security of the visitor terminal is enhanced.

In some implementations, the management configuration information further includes: a preset encryption type; the information to be verified further includes: a visitor encryption type; and before comparing the preset service set identifier with the visitor service set identifier to obtain the identifier comparison result, the method further includes: comparing the preset encryption type with the visitor encryption type to obtain an encryption type matching result; and under the condition that the encryption type matching result indicates the same encryption type, decrypting encrypted information in the information to be verified to obtain the visitor service set identifier and the visitor password.

The encryption type can include: any one or more of symmetric encryption, asymmetric encryption, or hash algorithm encryption.

It should be noted that the encrypted information in the information to be verified is decrypted to obtain the visitor service set identifier and the visitor password only when the preset encryption type is determined to match the visitor encryption type. Therefore, the accuracy of the obtained visitor service set identifier and visitor password is guaranteed, while the safety of the visitor service set identifier and the visitor password in data transmission is guaranteed by means of collecting encryption.

For example, if the preset encryption type and the visitor encryption type are both symmetric encryption, then a decryption type corresponding to symmetric encryption may be used to decrypt the encrypted information in the information to be verified, so that the visitor service set identifier and the visitor password are obtained and used for further verification of the visitor terminal, and the accuracy of the verification is increased.

In some implementations, the management configuration information further includes: a preset authentication type; the information to be verified further includes: a visitor authentication type; and before comparing the preset encryption type with the visitor encryption type to obtain the encryption type matching result, the method further includes: comparing the preset authentication type with the visitor authentication type to obtain an authentication matching result; and under the condition that the authentication matching result indicates the same authentication type, performing the operation of comparing the preset encryption type with the visitor encryption type to obtain the encryption type matching result.

The preset authentication type is used for verifying whether the terminal to be accessed has a right of accessing the data.

For example, the administrator terminal has the highest data access privilege, and may set relevant parameters in the customer premise equipment to facilitate verification of the visitor terminal. However, the visitor terminal, with a relatively lower data access privilege than the administrator terminal, can only use network resources by accessing the customer premise equipment, but not set relevant parameters in the customer premise equipment, so that an invalid visitor terminal is prevented from changing the relevant parameters in the customer premise equipment at will, and the safety of the customer premise equipment is guaranteed.

It should be noted that the visitor terminal can be further verified only when the authentication matching result indicates the same authentication type, so as to ensure accuracy of the authentication.

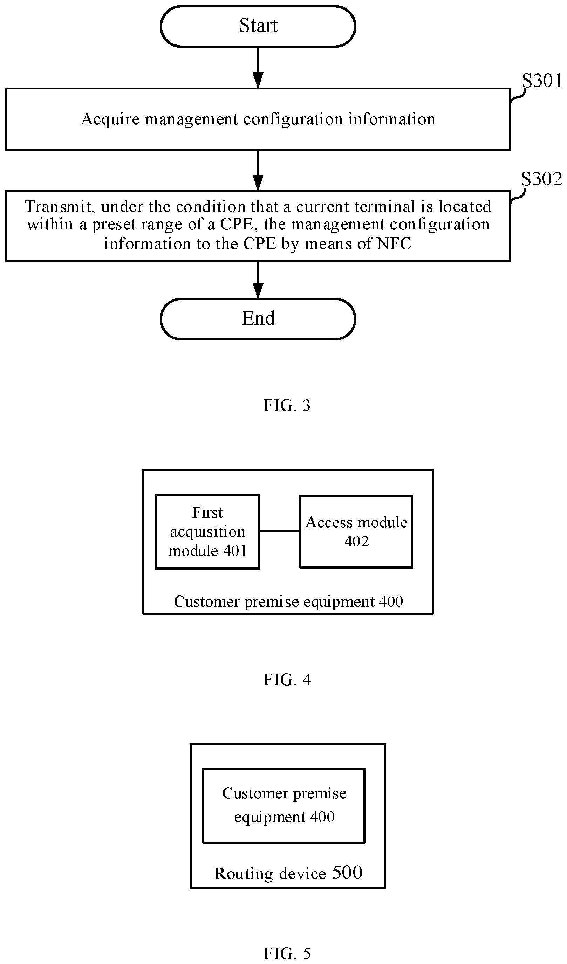

FIG. 3 shows a schematic flowchart of a terminal access method according to still another embodiment of the present disclosure. This terminal access method may be applied to a terminal. As shown in FIG. 3, the terminal access method provided in the present disclosure includes the following operations S301 to S302.

At operation 301, acquiring management configuration information.

The management configuration information is used for managing a visitor terminal.

In some implementations, the management configuration information includes: any one or more of an administrator identifier, a preset service set identifier, a preset password, a preset authentication type, or a preset encryption type.

The administrator identifier is used to represent that the current terminal has a higher access privilege than the visitor terminal.

By configuring and managing the customer premise equipment with multi-dimensional configuration information, multi-dimensional verification on the visitor terminal can be guaranteed, so that invalid visitors are prevented from accessing the network, and data security in the network is enhanced.

At operation 302, transmitting, under the condition that a current terminal is located within a preset range of a CPE, the management configuration information to the CPE by means of NFC.

Under the condition that the current terminal is located within a preset range (e.g., a distance between the current terminal and the customer premise equipment is 6 meters, etc.), a previous terminal may transmit the management configuration information to the CPE through an NFC module built in the previous terminal, so that the CPE can quickly and accurately obtain the management configuration information without manual setting, and the accuracy of the management configuration information is guaranteed.

Under the condition that the CPE has obtained the management configuration information, the CPE determines, according to the management configuration information and information to be verified of the visitor terminal, whether access of the visitor terminal is permitted.

The information to be verified includes: any one or more of a visitor service set identifier, a visitor password, a visitor authentication type, or a visitor encryption type. By setting the information to be verified of the visitor terminal with information matched with the management configuration information, the accuracy of verification of the visitor terminal can be guaranteed.

In this embodiment, the management configuration information is acquired, and under the condition that a current terminal is located within a preset range of a CPE, the obtained management configuration information is transmitted to the CPE by means of NFC without manual setting, so that the accuracy of the management configuration information is guaranteed, and the CPE determines, according to the management configuration information and the information to be verified of the visitor terminal, whether access of the visitor terminal is permitted, so that a valid visitor terminal can quickly and accurately access the network to obtain desired network resources.

The customer premise equipment of the present disclosure will be described in detail below with reference to the accompanying drawings. FIG. 4 shows a schematic structural diagram of a customer premise equipment according to the present disclosure. As shown in FIG. 4, a customer premise equipment 400 includes a first acquisition module 401, and an access module 402.

The first acquisition module 401 is configured to acquire, under the condition that an administrator terminal is located within a preset range, management configuration information of the administrator terminal by means of NFC, where the management configuration information is used for managing a visitor terminal.

The access module 402 is configured to determine, according to the management configuration information and information to be verified of the visitor terminal, whether access of the visitor terminal is permitted.

In this embodiment, under the condition that the administrator terminal is located within the preset range, the first acquisition module can quickly acquire the management configuration information of the administrator terminal by means of the NFC without manual setting by a user, so that the accuracy of the management configuration information can be guaranteed, and the visitor terminal can access the network quickly, thereby providing great convenience for the user; and the access module determines, according to the management configuration information and information to be verified of the visitor terminal, whether access of the visitor terminal is permitted, so that validity of the visitor terminal is guaranteed.

FIG. 5 shows a schematic structural diagram of a routing device according to the present disclosure. As shown in FIG. 5, a routing device 500 includes at least: the customer premise equipment 400 as shown in FIG. 4.

For example, the customer premise equipment 400 can include a first acquisition module 401 and an access module 402. The first acquisition module 401 is configured to acquire, under the condition that an administrator terminal is located within a preset range, management configuration information of the administrator terminal by means of NFC, where the management configuration information is used for managing a visitor terminal. The access module 402 is configured to determine, according to the management configuration information and information to be verified of the visitor terminal, whether access of the visitor terminal is permitted.

In some implementations, the first acquisition module 401 may be further configured to: acquire Wi-Fi state information of a current equipment; under the condition that the administrator terminal is located within the preset range and a Wi-Fi state of the current equipment is off, set the Wi-Fi state to on; and read the management configuration information of the administrator terminal by means of the NFC.

In some implementations, the customer premise equipment 400 further includes: an updating module. The updating module is configured to, under the condition that a Wi-Fi state of the current equipment is on and the visitor terminal is not located within the preset range, set the Wi-Fi state to off; and update the management configuration information with preset configuration information.

In this embodiment, under the condition that the administrator terminal is located within the preset range, the first acquisition module can quickly acquire the management configuration information of the administrator terminal by means of the NFC without manual setting by a user, so that the accuracy of the management configuration information can be guaranteed, and the visitor terminal can access the network quickly, thereby providing great convenience for the user; and the access module determines, according to the management configuration information and information to be verified of the visitor terminal, whether access of the visitor terminal is permitted, so that validity of the visitor terminal is guaranteed.

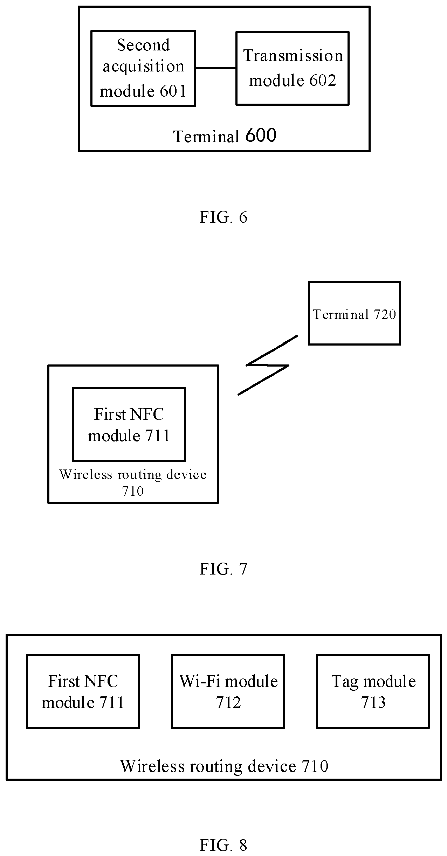

FIG. 6 shows a schematic structural diagram of a terminal according to the present disclosure. As shown in FIG. 6, a terminal 600 includes: a second acquisition module 601 and a transmission module 602.

The second acquisition module 601 is configured to acquire management configuration information, where the management configuration information is used for managing a visitor terminal. The transmission module 602 is configured to transmit, under the condition that a current terminal is located within a preset range of a CPE, the management configuration information to the CPE by means of NFC, so that the CPE determines, according to the management configuration information and the information to be verified of the visitor terminal, whether access of the visitor terminal is permitted.

In this embodiment, the management configuration information is acquired by the second acquisition module, and under the condition that a current terminal is located within the preset range of the CPE, the transmission module can transmit the obtained management configuration information to the CPE by means of the NFC without manual setting, so that the accuracy of the management configuration information is guaranteed, and the CPE determines, according to the management configuration information and the information to be verified of the visitor terminal, whether access of the visitor terminal is permitted, so that a valid visitor terminal can quickly and accurately access the network to obtain desired network resources.

FIG. 7 shows a block diagram of a terminal access system according to an embodiment of the present disclosure. As shown in FIG. 7, a terminal access system includes: a wireless routing device 710 and a terminal 720.

The wireless routing device 710 includes a near field communication module 711. Meanwhile, the terminal 720 also needs a near field communication module to enable near field communication between the terminal 720 and the wireless routing device 710.

Near field communication with the terminal 720 may be enabled by the near field communication module 711, so that configuration of the wireless routing device 710 can be implemented through the terminal 720, and /or the terminal 720 may be connected to the wireless routing device 710, so that the terminal 720 can be connected to the internet and obtain network information.

In some implementations, FIG. 8 shows a schematic structural diagram of a wireless routing device in a terminal access system according to the present disclosure. As shown in FIG. 8, a wireless routing device 710 includes: a first near field communication module 711, a Wi-Fi module 712, and a tag module 713.

The tag module 713 has an NFC tag function. For example, the first near field communication module 711 may be an NFC reader.

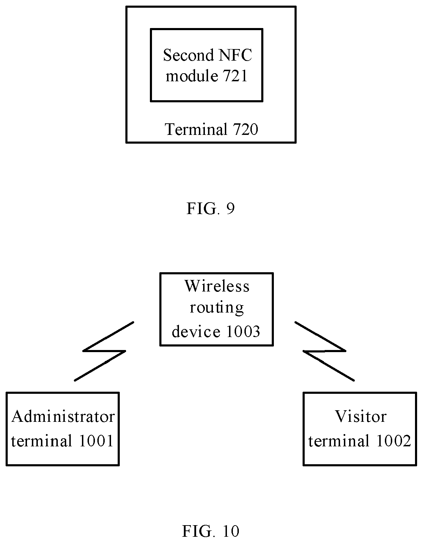

In some implementations, FIG. 9 shows a schematic structural diagram of a terminal in a terminal access system according to the present disclosure. As shown in FIG. 9, a terminal 720 includes: a second near field communication module 721.

The second near field communication module 721 may also be an NFC reader. Also, the terminal 720 needs to have an NFC tag function.

In the communication with the wireless routing device 710 by the terminal 720, the terminal 720 may approach an antenna sensing area corresponding to the first near field communication module 711 of the wireless routing device 710, so that the second near field communication module 721 in the terminal 720 can interact with the first near field communication module 711 to read relevant configuration information and /or verification information in the terminal 720.

In this embodiment, the second near field communication module in the terminal interacts with the first near field communication module to implement configuration of the wireless routing device by near field communication, or the terminal is connected to the internet through the wireless routing device, so that network interconnection of different devices can be quickly implemented, operation of the devices is facilitated, while the speed of the terminal accessing the network is increased, and the user experience is improved.

FIG. 10 shows a block diagram of a terminal access system according to another embodiment of the present disclosure. As shown in FIG. 10, a terminal access system includes: an administrator terminal 1001, a visitor terminal 1002, and a wireless routing device 1003.

The administrator terminal 1001 is configured to configure the wireless routing device 1003 with preset management configuration information, so that the wireless routing device 1003 can permit access of the visitor terminal 1002.

For example, the management configuration information may include: any one or more of a terminal type identifier, a preset service set identifier, a preset password, a preset encryption type, or a preset authentication type. The management configuration information may be represented in an NFC data exchange format (NDEF).

The terminal type identifier includes: an administrator terminal or a visitor terminal. When the administrator terminal 1001 is located within a preset range of the wireless routing device 1003, the wireless routing device 1003 may read the management configuration information in the administrator terminal 1001 through the first near field communication module 711. Under the condition that the terminal type identifier is the administrator terminal, a state of the Wi-Fi module 712 is inquired, and under the condition that the state of the Wi-Fi module 712 is off, the Wi-Fi module 712 is set to on, and the management configuration information is recorded in the tag module 713.

When the visitor terminal 1002 is located within a preset range of the wireless routing device 1003, the wireless routing device 1003 reads information to be verified in the visitor terminal 1002 through the first near field communication module 711. The information to be verified may include: any one or more of a visitor service set identifier, a visitor password, a visitor encryption type, or a visitor authentication type. By matching the information to be verified with the management configuration information, it is determined whether to access the visitor terminal 1002 to the wireless routing device 1003.

Under the condition that the state of the Wi-Fi module 712 is on and the visitor terminal 1002 is not located within the preset range, the state of the Wi-Fi module 712 is set to off; and the management configuration information is updated with preset configuration information, or directly cleared.

The preset configuration information may include conventional user configuration information originally configured by the administrator terminal 1001, such as configuration information of a terminal used by a family member or the like. The preset configuration information and the management configuration information are in the same data format. Therefore, validity of the visitor terminal can be guaranteed, so that an anonymous user cannot be connected to the wireless routing device 1003, and the security of the network resources is ensured.

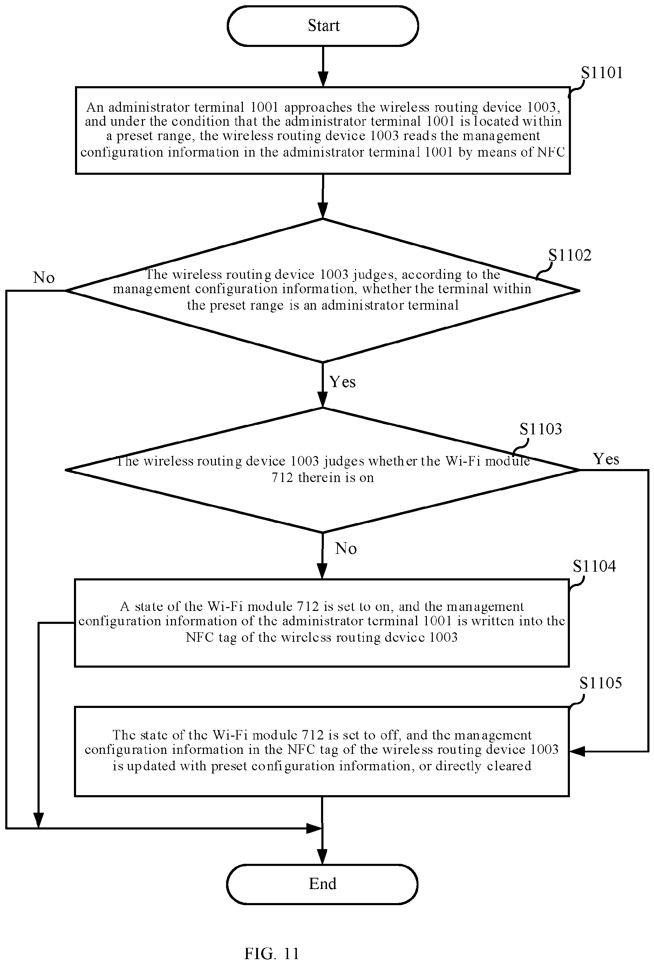

FIG. 11 shows a schematic flowchart of a method for configuring a wireless routing device by an administrator terminal according to the present disclosure. As shown in FIG. 11, a method for configuring a wireless routing device 1003 by an administrator terminal includes the following operations S1101 to S1105.

At operation S1101, an administrator terminal 1001 approaches the wireless routing device 1003, and under the condition that the administrator terminal 1001 is located within a preset range, the wireless routing device 1003 reads the management configuration information in the administrator terminal 1001 by means of NFC.

For example, the wireless routing device 1003 reads Wi-Fi pairing information from an NFC tag of the administrator terminal 1001, and uses the Wi-Fi pairing information as the management configuration information. A data structure of data stored in the NFC tag of the administrator terminal 1001 (i.e., a data structure corresponding to the management configuration information) is shown in table 1.

**Table 1**

| | | | | |
|---|---|---|---|---|
| Terminal type | Service set identifier | Password | Authentication type | Encryption type |

The management configuration information includes: any one or more of a terminal type, a preset service set identifier, a preset password, a preset authentication type, or a preset encryption type.

It should be noted that the terminal type includes: an administrator terminal or a visitor terminal. For example, when the terminal type is determined to be 0, it indicates that data of the visitor terminal is stored in the NFC tag, and when the terminal type is determined to be 1, it indicates that data of the administrator terminal is stored in the NFC tag.

The preset service set identifier may be a service set identifier (SSID) prestored in the administrator terminal, and the preset password is a password corresponding to the preset SSID. The preset authentication type (AuthType) is used for verifying whether the terminal to be accessed has a right of accessing the data, and the preset encryption type (EncryType) represents an encryption type of data. For example, the preset encryption type may include: any one or more of symmetric encryption, asymmetric encryption, or hash algorithm encryption.

At operation S1102, the wireless routing device 1003 judges, according to the management configuration information, whether the terminal within the preset range is an administrator terminal.

It should be noted that the information to be verified stored in the NFC tag of the visitor terminal 1002 corresponds to a data structure the same as the data structure shown in table 1. The information to be verified includes: any one or more of a terminal type, a visitor service set identifier, a visitor password, a visitor authentication type, or a visitor encryption type. However, the terminal type in the information to be verified is visitor terminal, so that the wireless routing device 1003 can distinguish between different terminal types.

A data structure of data stored in the NFC tag of the wireless routing device 1003 is shown in table 2.

**Table 2**

| | | | |
|---|---|---|---|
| Service set identifier | Password | Authentication type | Encryption type |

Under the condition that the terminal located within the preset range is the administrator terminal, operation S 1103 is performed; and under the condition that the terminal located within the preset range is not an administrator terminal, the process is ended.

At operation S1103, the wireless routing device 1003 judges whether the Wi-Fi module 712 therein is on.

Under the condition that the Wi-Fi module 712 is on, operation S1105 is performed; and under the condition that the terminal located within the preset range is not an administrator terminal, operation S1104 is performed.

At operation S1104, a state of the Wi-Fi module 712 is set to on, and the management configuration information of the administrator terminal 1001 is written into the NFC tag of the wireless routing device 1003.

It should be noted that the process is ended when operation S1104 is completed.

At operation S1105, the state of the Wi-Fi module 712 is set to off, and the management configuration information in the NFC tag of the wireless routing device 1003 is updated with preset configuration information, or directly cleared.

The preset configuration information may be conventional user configuration information originally configured by the wireless routing device 1003, such as configuration information of a terminal used by a family member or the like.

In this embodiment, the administrator terminal is used to configure the wireless routing device by the NFC, so that the wireless routing device can accurately and quickly obtain the management configuration information, and correspondingly set the working state of the Wi-Fi module without manual setting by a user, so that the accuracy of the management configuration information can be guaranteed, and the visitor terminal can access the network quickly, thereby providing great convenience for the user.

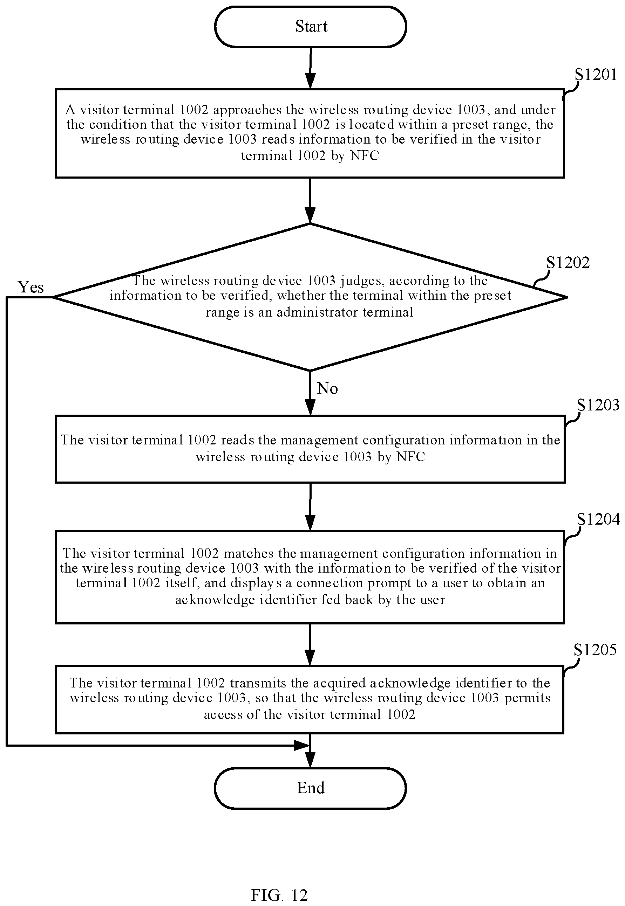

FIG. 12 shows a schematic flowchart of a method for accessing a wireless routing device by a visitor terminal according to the present disclosure. As shown in FIG. 12, a method for accessing a wireless routing device by a visitor terminal includes the following operations S1201 to S1205.

At operation S1201, a visitor terminal 1002 approaches the wireless routing device 1003, and under the condition that the visitor terminal 1002 is located within a preset range, the wireless routing device 1003 reads information to be verified in the visitor terminal 1002 by NFC.

For example, the visitor terminal 1002 enters an NFC sensing area of the wireless routing device 1003, and the wireless routing device 1003 reads the information to be verified in an NFC tag module of the visitor terminal 1002 through an NFC card reader in the wireless routing device 1003.

At operation S1202, the wireless routing device 1003 judges, according to the information to be verified, whether the terminal within the preset range is an administrator terminal.

It should be noted that under the condition that the terminal located within the preset range is not an administrator terminal, i.e., the terminal is a visitor terminal, operation S1203 is performed, and under the condition that the terminal located within the preset range is an administrator terminal, the process is ended.

At operation S1203, the visitor terminal 1002 reads the management configuration information in the wireless routing device 1003 by NFC.

For example, the visitor terminal 1002 reads the management configuration information in an NFC tag module of the wireless routing device 1003 through an NFC reader in the visitor terminal 1002.

At operation S1204, the visitor terminal 1002 matches the management configuration information in the wireless routing device 1003 with the information to be verified of the visitor terminal 1002 itself, and displays a connection prompt to a user to obtain an acknowledge identifier fed back by the user.

The management configuration information includes: a preset service set identifier and a preset password; and the information to be verified includes: a visitor service set identifier and a visitor password.

When the visitor terminal 1002 matches the management configuration information with the information to be verified of the visitor terminal itself, and determines that the visitor password is the same as the preset password, and the visitor service set identifier is the same as the preset service set identifier, a connection prompt is generated according to the preset service set identifier and displayed to the user to obtain an acknowledge identifier fed back by the user.

At operation S1205, the visitor terminal 1002 transmits the acquired acknowledge identifier to the wireless routing device 1003, so that the wireless routing device 1003 permits access of the visitor terminal 1002.

The acknowledge identifier is used to represent that the visitor terminal 1002 is determined to access a network.

Under the condition that the wireless routing device 1003 obtains the acknowledge identifier and the information to be verified matches the management configuration information, the wireless routing device 1003 determines to permit access of the visitor terminal 1002, so that the visitor terminal 1002 can access the internet to obtain the desired network information.

In this embodiment, under the condition that the visitor terminal is located within the preset range, the management configuration information obtained through interaction with the administrator terminal is used for verifying the information to be verified of the visitor terminal, and a connection prompt is displayed to the user to obtain an acknowledge identifier fed back by the user. The acknowledge identifier can further verify the access of the visitor terminal to the wireless routing device, to ensure that the access meets the user requirement and is a behavior permitted by the user, thereby enhancing data security of the visitor terminal. Moreover, the wireless routing device can quickly and accurately verify the visitor terminal without further manual setting relevant configuration information of the wireless routing device, thereby facilitating operation of the wireless routing device.

It should be noted that the present disclosure is not limited to the particular configurations and processes described in the above embodiments and illustrated in the drawings. For convenience and simplicity of description, detailed description of a known method is omitted here, and for the specific working processes of the system, the modules and the units described above, reference may be made to corresponding processes in the foregoing method embodiments, which are not repeated here.

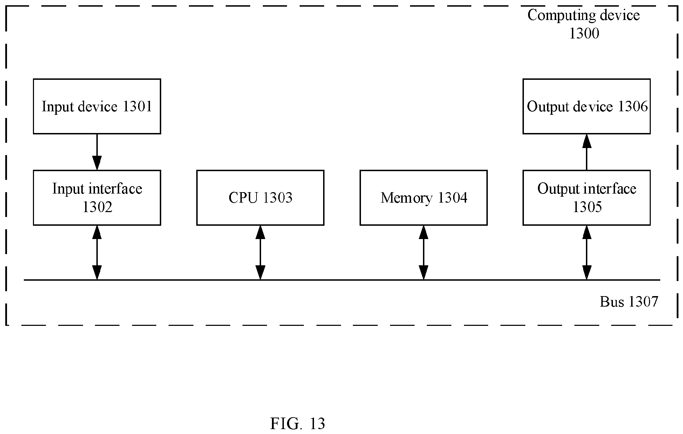

FIG. 13 shows a block diagram of an exemplary hardware architecture of a computing device capable of implementing the terminal access method and apparatus according to the present disclosure.

As shown in FIG. 13, the computing device 1300 includes an input device 1301, an input interface 1302, a central processing unit 1303, a memory 1304, an output interface 1305, and an output device 1306. The input interface 1302, the central processing unit 1303, the memory 1304, and the output interface 1305 are connected to each other via a bus 1307, and the input device 1301 and the output device 1306 are connected to the bus 1307 via the input interface 1302 and the output interface 1305, respectively, and further connected to other components of the computing device 1300.

In an exemplary embodiment, the input device 1301 receives input information from the outside, and transmits the input information to the central processing unit 1303 through the input interface 1302; the central processing unit 1303 processes the input information based on computer-executable instructions stored in the memory 1304 to generate output information, stores the output information temporarily or permanently on the memory 1304, and then transmits the output information to the output device 1306 through the output interface 1305; and the output device 1306 outputs the output information outside of the computing device 1300 for use by a user.

In an embodiment, the computing device shown in FIG. 13 may be implemented as an electronic device including: a memory configured to store a program; and a processor configured to execute the program stored in the memory to perform the terminal access method described in the above embodiments.

In an embodiment, the computing device shown in FIG. 13 may be implemented as a terminal access system including: a memory configured to store a program; and a processor configured to execute the program stored in the memory to perform the terminal access method described in the above embodiments.

The above are merely exemplary embodiments of the present disclosure and not intended to limit the scope of the present disclosure. In general, the various embodiments of the present disclosure may be implemented in hardware or special purpose circuits, software, logic or any combination thereof. For example, some aspects may be implemented in hardware, while other aspects may be implemented in firmware or software which may be executed by a controller, a microprocessor or any other computing device, although the present disclosure is not limited thereto.

Embodiments of the present disclosure may be implemented by a data processor of a mobile device executing computer program instructions, for example, in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object codes written in any combination of one or more programming languages.

The block diagrams of any logic flow in the figures of the present application may represent program operations, or may represent interconnected logic circuits, modules, and functions, or may represent a combination of program operations and logic circuits, modules, and functions. The computer program may be stored on a memory. The memory may be of any type suitable to the local technical environment and may be implemented in any suitable data storage technology, such as but not limited to, read only memories (ROMs), random access memories (RAMs), optical storage devices or systems (digital versatile discs (DVDs), compact discs (CDs)), etc. The computer-readable medium may include a non-transitory storage medium. The data processor may be of any type suitable to the local technical environment, such as but not limited to, general purpose computers, dedicated computers, microprocessors, digital signal processors (DSPs), application specific integrated circuits (ASICs), field programmable gate arrays (FGPAs), and processors based on multi-core processor architecture.

The foregoing has provided by way of exemplary and non-limiting examples a detailed description of exemplary embodiments of the present disclosure. Various modifications and adaptations to the foregoing embodiments may become apparent to those skilled in the art in view of the accompanying drawings and the appended claims, without departing from the scope of the present disclosure. Accordingly, the proper scope of the present disclosure is to be determined according to the claims.

## Claims

1. A terminal access method, comprising:
acquiring, under the condition that an administrator terminal is located within a preset range, management configuration information of the administrator terminal by means of near field communication NFC, wherein the management configuration information is used for managing a visitor terminal; and
determining, according to the management configuration information and information to be verified of the visitor terminal, whether access of the visitor terminal is permitted.

2. The method according to claim 1, wherein acquiring, under the condition that the administrator terminal is located within the preset range, management configuration information of the administrator terminal by means of the NFC comprises:
acquiring Wi-Fi state information of a current equipment;
under the condition that the administrator terminal is located within the preset range and a Wi-Fi state of the current equipment is off, setting the Wi-Fi state to on; and
reading the management configuration information of the administrator terminal by means of the NFC.

3. The method according to claim 1, wherein after determining, according to the management configuration information and the information to be verified of the visitor terminal, whether access of the visitor terminal is permitted, the method further comprises:
under the condition that a Wi-Fi state of the current equipment is on and the visitor terminal is not located within the preset range, setting the Wi-Fi state to off; and
updating the management configuration information with preset configuration information.

4. The method according to any one of claims 1 to 3, wherein the management configuration information comprises: a preset service set identifier and a preset password; the information to be verified comprises: a visitor service set identifier and a visitor password; and
determining, according to the management configuration information and the information to be verified of the visitor terminal, whether access of the visitor terminal is permitted comprises:
comparing the preset service set identifier with the visitor service set identifier to obtain an identifier comparison result;
comparing the preset password with the visitor password to obtain a password comparison result; and
determining, according to the identifier comparison result and the password comparison result, whether access of the visitor terminal is permitted.

5. The method according to claim 4, wherein determining, according to the identifier comparison result and the password comparison result, whether access of the visitor terminal is permitted comprises:
under the condition that the identifier comparison result indicates the same identifier and the password comparison result indicates the same password, acquiring an acknowledge identifier fed back from the visitor terminal; and
determining, according to the acknowledge identifier, to permit access of the visitor terminal.

6. The method according to claim 4, wherein the management configuration information further comprises: a preset encryption type; the information to be verified further comprises: a visitor encryption type; and
before comparing the preset service set identifier with the visitor service set identifier to obtain the identifier comparison result, the method further comprises:
comparing the preset encryption type with the visitor encryption type to obtain an encryption type matching result; and
under the condition that the encryption type matching result indicates the same encryption type, decrypting encrypted information in the information to be verified to obtain the visitor service set identifier and the visitor password.

7. The method according to claim 6, wherein the management configuration information further comprises: a preset authentication type; the information to be verified further comprises: a visitor authentication type; and
before comparing the preset encryption type with the visitor encryption type to obtain the encryption type matching result, the method further comprises:
comparing the preset authentication type with the visitor authentication type to obtain an authentication matching result; and
under the condition that the authentication matching result indicates the same authentication type, performing the operation of comparing the preset encryption type with the visitor encryption type to obtain the encryption type matching result.

8. The method according to claim 1 or 2, wherein before acquiring, under the condition that the administrator terminal is located within the preset range, management configuration information of the administrator terminal by means of the NFC, the method further comprises:
reading, under the condition that the visitor terminal is located within the preset range, the information to be verified of the visitor terminal by means of the NFC.

9. A terminal access method, comprising:
acquiring management configuration information, wherein the management configuration information is used for managing a visitor terminal; and
transmitting, under the condition that a current terminal is located within a preset range of a customer premise equipment CPE, the management configuration information to the CPE by means of near field communication NFC, so that the CPE determines, according to the management configuration information and the information to be verified of the visitor terminal, whether access of the visitor terminal is permitted.

10. The method according to claim 9, wherein the management configuration information comprises: any one or more of an administrator identifier, a preset service set identifier, a preset password, a preset authentication type, or a preset encryption type;
wherein the administrator identifier is used to represent that the current terminal has a higher access privilege than the visitor terminal.

11. The method according to claim 9, wherein the information to be verified comprises: any one or more of a visitor service set identifier, a visitor password, a visitor authentication type, or a visitor encryption type.

12. A customer premise equipment, comprising:
a first acquisition module configured to acquire, under the condition that an administrator terminal is located within a preset range, management configuration information of the administrator terminal by means of near field communication NFC, wherein the management configuration information is used for managing a visitor terminal; and
an access module configured to determine, according to the management configuration information and information to be verified of the visitor terminal, whether access of the visitor terminal is permitted.

13. A routing device, comprising:
at least one customer premise equipment according to claim 12.

14. A terminal, comprising:
a second acquisition module configured to acquire management configuration information, wherein the management configuration information is used for managing a visitor terminal; and
a transmission module configured to transmit, under the condition that a current terminal is located within a preset range of a customer premise equipment CPE, the management configuration information to the CPE by means of near field communication NFC, so that the CPE determines, according to the management configuration information and the information to be verified of the visitor terminal, whether access of the visitor terminal is permitted.

15. An electronic device, comprising:
one or more processors; and
a memory having one or more programs stored thereon which, when executed by the one or more processors, cause the one or more processors to implement the method according to any one of claims 1 to 8, or the method according to any one of claims 9 to 11.

16. A readable storage medium having a computer program stored thereon which, when executed by a processor, causes the method according to any one of claims 1 to 8, or the method according to any one of claims 9 to 11 to be implemented.
